(19) Europäisches Patentamt
European Patent Office
Office européen des brevets

(11) EP 2 588 523 B1

(12) EUROPEAN PATENT SPECIFICATION

(45) Date of publication and mention of the grant of the patent:
**14.01.2015 Bulletin 2015/03**

(21) Application number: **11726748.4**

(22) Date of filing: **15.06.2011**

(51) Int Cl.:
***C08L 23/10*** *(2006.01)* ***C08J 3/22*** *(2006.01)*
***C08J 5/00*** *(2006.01)* ***B82Y 30/00*** *(2011.01)*
***C08L 23/12*** *(2006.01)* ***C08L 51/06*** *(2006.01)*

(86) International application number:
**PCT/EP2011/059870**

(87) International publication number:
**WO 2012/000783 (05.01.2012 Gazette 2012/01)**

# (54) FILLED POLYOLEFIN COMPOSITIONS

GEFÜLLTE POLYOLEFINZUSAMMENSETZUNGEN

COMPOSITIONS DE POLYOLÉFINE CHARGÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2010 US 398799 P**
**29.06.2010 EP 10167708**

(43) Date of publication of application:
**08.05.2013 Bulletin 2013/19**

(73) Proprietor: **Basell Poliolefine Italia S.r.l.**
**20127 Milano (IT)**

(72) Inventors:
- **MASARATI, Enrico**
**I-29010 Castelnovo Val Tidone (Piacenza) (IT)**
- **COSTANTINI, Enrico**
**IT-44122 Ferrara (IT)**
- **CONSALVI, Marco**
**IT-44122 Ferrara (IT)**

(74) Representative: **Colucci, Giuseppe**
**Basell Poliolefine Italia S.r.l.**
**Intellectual Property**
**Piazzale G. Donegani 12**
**44122 Ferrara (IT)**

(56) References cited:
**EP-A1- 1 408 081**
**WO-A1-2004/099309**
**WO-A1-2006/131450**
**WO-A2-2009/068365**
**US-A1- 2007 117 899**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention concerns polyolefin compositions containing fillers, having an improved balance of processability and mechanical properties.

In particular, the compositions of the present invention allow to achieve a very favorable and unusual balance of mechanical properties and improved processability in a wide range of melt flow rate, hereinafter abbreviated into MFR, notwithstanding the presence of mineral fillers. It has been already suggested in the art to use propylene polymers with high MFR values in order to increase the final MFR values of the compositions. According to U.S. patent application No. 20060264557 (Exxon), reinforced polypropylene compositions with good impact properties are obtained by blending high amounts of organic fibers and optionally inorganic fillers to a polypropylene resin having a MFR of from about 20 to about 1500 g/10 min. Actually the highest MFR values of the propylene polymers used in the examples of the said document are of 400-430 g/10 min.

Composites are also known in the art comprising a polyolefin resin and nanosize mineral filler in low amounts to improve the mechanical properties of the polyolefin material.

For example, US patent 5910523 describes polyolefin nanocomposite materials comprising a semi-crystalline polyolefin and a nanosize mineral filler wherein the surface of the filler has been modified with functionalized compounds.

WO2006/131450 describes a polyolefin nanocomposite material comprising a crystalline or semi-crystalline polyolefin resin (A); a nanosize filler (B) comprising or substantially consisting of a layered mineral, preferred example of which is a layer silicate, exhibiting an interesting balance of mechanical properties and MFR values of from 1 to 800 dg/min.

It has now been found that an improved balance of flexural modulus, impact resistance, tensile properties and heat deflection temperature (hereinafter HDT), and processability in terms of spiral flow length is achieved by blending nanosized mineral fillers with propylene polymers having very high MFR values.

Other improved properties achieved by the compositions of the present invention are creep resistance, hardness and scratch resistance.

Moreover, in comparison with the filled compositions known in the art, the compositions of the invention present also higher ability to fill cavity moulds, even with complex design, and bring to a reduction of cycle times in injection moulding applications.

The enhanced flowability of the compositions of the present invention, together with their higher stiffness values, makes it also possible to reduce the thickness of moulded items produced.

In detail, the present invention provides filled polyolefin compositions comprising:

A) from 99.9 % to 75 % by weight, of a polypropylene component;
B) from 0.1% to 25% by weight of a nanosize mineral filler;

wherein the percentages of A) and B) are referred to the sum of A) and B), and A) is selected from the following compositions:

a) a polypropylene composition containing from 20% to 80% by weight, preferably 20% to 60% by weight, of a polypropylene fraction $A^{I}$) having a melt flow rate ($MFR^{I}$) value of 100 g/10 min or more, preferably from 500 g/10 min. or more, and from 20% to 80% by weight, preferably from 40% to 80%, of a polypropylene fraction $A^{II}$) having a melt flow rate ($MFR^{II}$) value of from 0.1 to 30 g/10 min., the said percentages of $A^{I}$) and $A^{II}$) being referred to the sum of $A^{I}$) and $A^{II}$); or

b) a polypropylene composition containing from 15% to 72% by weight, preferably 15% to 52% by weight, of a polypropylene fraction $A^{I}$) having a melt flow rate ($MFR^{I}$) value of 100 g/10 min, preferably of 500 g/10 min. or more, from 15% to 70% by weight, preferably from 15% to 50% by weight of a polypropylene fraction $A^{II}$) having a melt flow rate ($MFR^{II}$) value of from 0.1 to 30 g/10 min. and from 0.5% to 15% by weight of a compatibilizer Q), the said percentages of $A^{I}$), $A^{II}$)and Q) being referred to the sum of $A^{1}$), $A^{II}$) and Q);

said fractions $A^{I}$) and $A^{II}$)being independently selected from propylene homopolymers and random copolymers of propylene containing up to 5% by moles of ethylene and/or $C_4$-$C_{10}$ $\alpha$-olefin(s); all the melt flow rate values being measured according to ISO 1133 with a load of 2.16 kg at 230 °C.

Preferably the compositions of the present invention comprise from 99 % to 80 %, more preferably from 97% to 88%, even more preferably from 96 % to 91 % by weight of A) and preferably from 1% to 20%, more preferably from 3% to 12%, even more preferably from 4 % to 8 % by weight of B) with respect to the total weight of A) and B).

The fraction $A^{I}$) as defined above is a propylene polymer or polymer composition having from high to very high MFR values, namely of 100 g/10 min or more, preferably of 500 g/10 min. or more, even more preferably of 1200 g/10 min. or more, in particular from 500 to 2500 g/10 min. or from 1200 to 2500 g/10 min..

Moreover such MFR values are preferably obtained without any degradation treatment. In other words, the fraction $A^I$) is preferably made of as-polymerized propylene polymers, not subjected after polymerization to any treatment able to substantially change the MFR value. Thus, also the molecular weights of fraction $A^I$) are substantially those directly obtained in the polymerization process used to prepare the propylene polymers.

Alternatively, but not preferably, the said MFR values are obtained by degradation (visbreaking) of propylene polymers having lower MFR values.

The comonomers in the propylene copolymers that can be present in fraction $A^I$) are selected from ethylene and/or $C_4$-$C_{10}$ $\alpha$-olefins, such as for example butene-1, pentene-1, 4-methylpentene-1, hexene-1 and octene-1. The preferred comonomers are ethylene and butene-1.

All the propylene polymers and copolymers of fraction $A^I$) can be prepared by using a Ziegler-Natta catalyst or a metallocene-based catalyst system in the polymerization process. The said catalysts and the polymerization processes are known in the art.

Conventional molecular weight regulators known in the art, such as chain transfer agents (e.g. hydrogen or $ZnEt_2$), may be used.

Preferred examples of Ziegler-Natta catalysts are the supported catalyst systems comprising a trialkylaluminium compound, optionally an electron donor, and a solid catalyst component comprising a halide or halogen-alcoholate of Ti and optionally an electron-donor compound supported on anhydrous magnesium chloride. Catalysts having the above-mentioned characteristics are well known in the patent literature; particularly advantageous are the catalysts described in USP 4,399,054 and EP-A-45 977. Other examples can be found in USP 4,472,524.

Examples of specific Ziegeler-Natta catalysts and polymerization processes suited for preparing the propylene polymers of fraction $A^I$) are disclosed in EP0622380.

Preferably, when the propylene polymers of fraction $A^I$) are prepared with Ziegler-Natta catalysts they have, at an MFR ranging from 600 to 1000 g/10 min., Mw values from 100,000 to 60,000, and at an MFR of higher than 1000 g/10 nim., Mz values higher than or equal to 140000, as disclosed in the said EP0622380.

Other preferred features for the said propylene polymers prepared with Ziegler-Natta catalysts are one or more of the following:

- Mz/Mw values from 2.5 to 2.8;
- Isotacticity Index, in terms of weight fraction insoluble in xylene at room temperature (about 25 °C) higher than or equal to 95%, more preferably higher than or equal to 97%.

More preferably, the propylene polymers of fraction $A^I$) are obtained directly in polymerization in the presence of a metallocene-based catalyst system.

The polymerization conditions in general do not need to be different from those used with Ziegler-Natta catalysts.

The preferred metallocene-based catalyst system is obtainable by contacting:

a) a metallocene compound of formula (I):

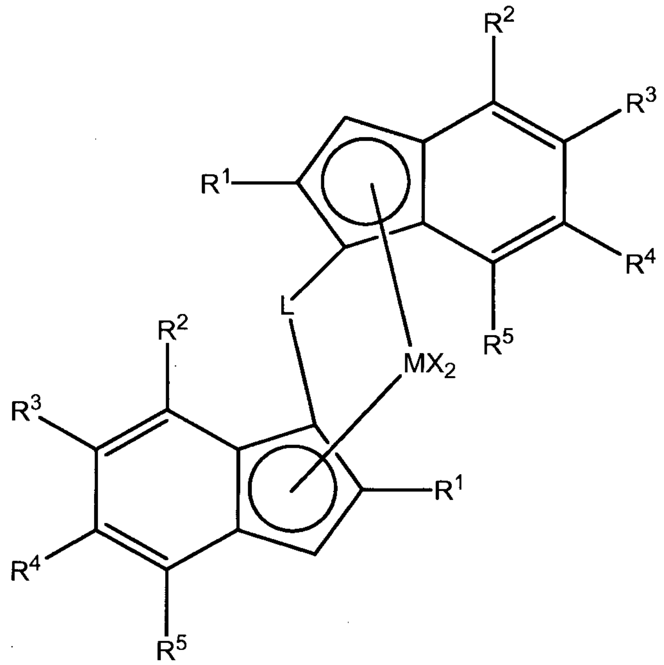

(I)

wherein

M is a transition metal belonging to group 3, 4, 5, 6 or to the lanthanide or actinide groups in the Periodic Table of the Elements; preferably M is titanium, zirconium or hafnium;
X, same or different, are hydrogen atoms, halogen atoms, or R, OR, $OSO_2CF_3$, OCOR, SR, $NR_2$ or $PR_2$ groups, wherein R are linear or branched, cyclic or acyclic, $C_1$-$C_{40}$-alkyl, $C_2$-$C_{40}$ alkenyl, $C_2$-$C_{40}$ alkynyl, $C_6$-$C_{40}$-aryl, $C_7$-$C_{40}$-alkylaryl or $C_7$-$C_{40}$-arylalkyl radicals;
optionally containing heteroatoms belonging to groups 13-17 of the Periodic Table of the Elements; preferably R is a linear or branched $C_1$-$C_{20}$-alkyl radical; or two X can optionally form a substituted or unsubstituted butadienyl radical or a OR'O group wherein R' is a divalent radical selected from $C_1$-$C_{40}$ alkylidene, $C_6$-$C_{40}$ arylidene, $C_7$-$C_{40}$ alkylarylidene and $C_7$-$C_{40}$ arylalkylidene radicals; preferably X is a hydrogen atom, a halogen atom or a R group; more preferably X is chlorine or a $C_1$-$C_{10}$-alkyl radical; such as methyl, or ethyl radicals;
L is a divalent $C_1$-$C_{40}$ hydrocarbon radical optionally containing heteroatoms belonging to groups 13-17 of the Periodic Table of the Elements or a divalent silylidene radical containing up to 5 silicon atom; preferably L is a divalent bridging group selected from $C_1$-$C_{40}$ alkylidene, $C_3$-$C_{40}$ cycloalkylidene, $C_6$-$C_{40}$ arylidene, $C_7$-$C_{40}$ alkylarylidene, or $C_7$-$C_{40}$ arylalkylidene radicals optionally containing heteroatoms belonging to groups 13-17 of the Periodic Table of the Elements, and silyliene radical containing up to 5 silicon atoms such as $SiMe_2$, $SiPh_2$; preferably L is a group $(Z(R'')_2)_n$ wherein Z is a carbon or a silicon atom, n is 1 or 2 and R'' is a $C_1$-$C_{20}$ hydrocarbon radical optionally containing heteroatoms belonging to groups 13-17 of the Periodic Table of the Elements; preferably R'' is a linear or branched, cyclic or acyclic, $C_1$-$C_{20}$-alkyl, $C_2$-$C_{20}$ alkenyl, $C_2$-$C_{20}$ alkynyl, $C_6$-$C_{20}$-aryl, $C_7$-$C_{20}$-alkylaryl or $C_7$-$C_{20}$-arylalkyl radicals optionally containing heteroatoms belonging to groups 13-17 of the Periodic Table of the Elements; more preferably the group $(Z(R'')_2)_n$ is $Si(CH_3)_2$, $SiPh_2$, SiPhMe, $SiMe(SiMe_3)$, $CH_2$, $(CH_2)_2$, and $C(CH_3)_2$; even more preferably $(Z(R'')_2)_n$ is $Si(CH_3)_2$.
$R^1$ is a $C_1$-$C_{40}$ hydrocarbon radical optionally containing heteroatoms belonging to groups 13-17 of the Periodic Table of the Elements; preferably $R^1$ is a linear or branched, cyclic or acyclic, $C_1$-$C_{40}$-alkyl, $C_2$-$C_{40}$ alkenyl, $C_2$-$C_{40}$ alkynyl, $C_6$-$C_{40}$-aryl, $C_7$-$C_{40}$-alkylaryl or $C_7$-$C_{40}$-arylalkyl radical; optionally containing heteroatoms belonging to groups 13-17 of the Periodic Table of the Elements; more preferably $R^1$ is a linear or branched, saturated or unsaturated $C_1$-$C_{20}$-alkyl radical;
$R^2$, $R^3$ $R^4$ and $R^5$, equal to or different from each other, are hydrogen atoms or $C_1$-$C_{40}$ hydrocarbon radicals optionally containing heteroatoms belonging to groups 13-17 of the Periodic Table of the Elements; or two R groups among $R^2$, $R^3$ $R^4$ and $R^5$ form a $C_4$-$C_7$ ring that can be unsaturater or saturated optionally containing heteroatoms belonging to groups 14-16 of the Periodic Table of the Elements; the ring formed can bear $C_1$-$C_{20}$ hydrocarbon substituents;

b) at least an alumoxane or a compound able to form an alkylmetallocene cation.

A specific example of metallocene compound a) is rac-dimethylsilylbis(2-methyl-4, 5-benzo-indenyl)-zirconium dichloride.

The alumoxanes are considered to be linear, branched or cyclic compounds containing at least one group of the type:

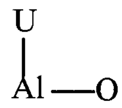

wherein the substituents U, same or different, are hydrogen atoms, halogen atoms, $C_1$-$C_{20}$-alkyl, $C_3$-$C_{20}$-cyclalkyl, $C_6$-$C_{20}$-aryl, $C_7$-$C_{20}$-alkylaryl or $C_7$-$C_{20}$-arylalkyl radicals, optionally containing silicon or germanium atoms, with the proviso that at least one U is different from halogen.

In particular, alumoxanes of the formula:

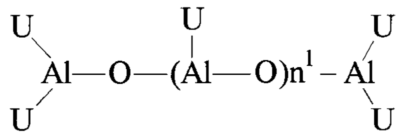

can be used in the case of linear compounds, wherein $n^1$ is 0 or an integer of from 1 to 40 and the substituents U are defined as above; or alumoxanes of the formula:

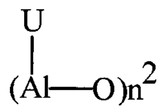

can be used in the case of cyclic compounds, wherein $n^2$ is an integer from 2 to 40 and the U substituents are defined as above.

Examples of suitable alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Bronsted acid, able to donate a proton and to react irreversibly with a substituent X of the metallocene of formula (I) and $E^-$ is a compatible anion, which is able to stabilize the active catalytic species originating from the reaction of the two compounds, and which is sufficiently labile to be removed by an olefinic monomer. Preferably, the anion $E^-$ comprises one or more boron atoms. More preferably, the anion $E^-$ is an anion of the formula $BAr_4^{(-)}$ wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012. Moreover, compounds of formula $BAr_3$ can be conveniently used. Compounds of this type are described, for example, in the International patent application WO 92/00333. Other examples of compounds able to form an alkylmetallocene cation are compounds of formula $BAr_3P$ wherein P is a substituted or unsubstituted pyrrol radical. These compounds are described in WO01/62764. All these compounds containing boron atoms can be used in a molar ratio between boron and the metal of the metallocene comprised between about 1:1 and about 10:1; preferably 1:1 and 2:1; more preferably about 1:1.

Other preferred features for the said propylene polymers prepared with a metallocene-based catalyst system are one or more of the following:

- distribution of molecular weight Mw/Mn lower than 4; more preferably lower than 3; most preferably lower than 2.7;
- isotactic pentads (mmmm) measured with $^{13}C$-NMR, higher than 90%; more preferably higher than 92%;
- xylene solubles at 25°C below 2% by weight, more preferably below 1.6% by weight;
- melting point measured by means of DSC, higher than 143°C;

The polypropylene fraction $A^{II}$)can be any propylene homopolymer or copolymer having a MFR value from 0.1 to 30 g/10 min.. Thus the said fraction $A^{II}$)can be prepared with conventional catalysts (Ziegler-Natta or metallocene-based) in conventional polymerization processes.

Preferred features for the said polypropylene fraction $A^{II}$)are one or more of the following:

- MFR values from 0.5 to 20 g/10 min.;
- Isotacticity Index, in terms of weight fraction insoluble in xylene at room temperature (about 25 °C) higher than or equal to 92%, more preferably higher than or equal to 95%;
- amount of comonomer(s) up to 9% by moles, more preferably up to 5% by moles;
- Mw/Mn > 4, more preferably Mw/Mn > 5;
- melt strength, measured at 230°C, higher than 1.50 cN, in particular ranging from 1.60 to 12.00 cN, more preferably from 1.60 to 8.00 cN.

Examples of comonomer(s) that can be present in $A^{II}$) are the same as previously defined for the polypropylene fraction $A^{I}$).

The nanosize mineral filler component B) to be used in the compositions of the present invention is preferably selected from nanohydrotalcite or phyllosilicates. As used herein the term "nanosize mineral filler" means a filler with at least one dimension (length, width or thickness) in the range from about 0.2 to about 250 nanometers.

Particularly preferred examples of silicates are smectite clays and nanozeolites. Smectite clays include, for example, montmorillonite, saponite, beidellite, hectorite, bohemite and stevensite. Particularly clays that may be used in the present invention besides smectite clay include kaolin clay, attapulgite clay and bentonite clay. Montomorillonite clays are preferred.

The layered mineral filler and particularly the layer silicates used for the preparation of the nanocomposite materials of the present invention generally comprise an organic component fraction. The amount of organic component fraction can vary widely, and can be expressed in terms of cationic exchange capacity (CEC).

The preferred layered mineral fillers to be used for the materials of the present invention have CEC values ranging from 70 to 140, more preferably over 120 milliequivalents per 100 g of mineral filler in dehydrated form.

Preferred organic compounds to be used as organic component are ammonium organic salts, like for example dimethyl dehydrogenated tallow quaternary ammonium.

The organic compounds are introduced in the layered mineral structure instead of existing metal cations, like in particular $Na^{+}$ and $Ca^{++}$, in amounts substantially equal to the said CEC values, therefore the layered mineral used for the preparation of the nanocomposite materials of the present invention generally comprises an organic component fraction (consisting of one or more organic compounds) in amounts ranging from 70 to 140, more preferably over 120 milliequivalents per 100 g of the layered mineral in dehydrated form. In terms of weight, the amount of organic component is generally of about 45% or less with respect to the total weight of the layered mineral, wherein the mineral itself is considered in the dehydrated form. Higher contents of organic component are not excluded; in fact good results are obtained also with amounts of organic component in the range from 40 to 60% by weight.

The amounts of layer silicate reported in the present invention are based on the dehydrated form.

When the layered nanosized mineral filler, is a hydrotalcite it is typically a layered mineral corresponding to the general formula:

$$Mg_{2x}\ Al_2\ (OH)_{4x+4}\ CO_3 \bullet n\ H2O$$

Were: x >0 and n>0

The hydrotalcite suitable for the preparation of the nanocomposite materials of the present invention generally comprise an organic component fraction that partially substitute $CO_3^{2-}$ or $OH^-$ anions on the superficial layers and also in internal layers.

When the hydrotalcite undergoes appropriate organic treatment the formula can be represented by:

$$Mg_{2x}\ Al_2\ (OH)_{(4x+4)-zl}\ (CO_3)_{1-z2}\ (A^{m-})_z \bullet n\ H2O$$

Were: x > 0 and "(z) × (m) = z1 + 2 z2" and n>0 and A=organic anion having a valence of m.

The amount of organic component fraction can vary widely, and could be in the range from 0,5% to 45% by weight, preferably from 20% to 45% by weight and can be expressed in terms of anionic exchange capacity (AEC) ranging from 0,5 to 6 milliequivalents per gram. All the above-mentioned amounts related to the weight of the layered nanosized mineral filler are based on the dehydrated form.

The organic component fraction is the anionic part of an anionic tensioactive or more generally an organic anion of a Metal organic salt (MeA). MeA increases the interlayer distance between the different layers of the filler improving the hydrotalcite dispersion in the polymer matrix.

The organic anions can be selected from the families of conjugated bases of organic acids (HA). Examples,

not exhaustive, of suitable organic acids are: carboxylic acids, fatty acids, sulfonic acids, phosphonic acids, and sulfate acids and it is possible to use also a combination of those anions.

Preferred are anions of organic substance approved for food contact in polymers like: Stearic acid, Erucic acid, Oleic acid, Palmitic acid, Laurilic acid, Benzoic acid, Rosin acid, Tartaric acid, Sebacic acid and Adipic acid anions.

As previously said, the polypropylene compositions of the present invention can also comprise a compatibilizer Q).

The compatibilizer is added to better disperse the mineral filler into the polyolefin resin. Preferred compatibilizer are modified polyolefins such as polyolefin copolymers comprising polar monomers and polyolefins grafted with grafting agents comprising polar groups such as those disclosed in the patent EP 0747322 (Toyota). In the present invention the grafting agents are preferably selected from those containing at least one functional group selected from carboxylic groups and their derivatives, such as anhydrides. The aforesaid polar monomers with one or more functional groups are preferably selected in the group comprising: vinyl acetate, acrylic acid, butyl acrilate, metil meta acrilate, meta acrylic acid and olefinic polar momomers.

Particularly preferred as grafting agents are anhydrides of an unsaturated dicarboxylic acid, especially maleic anhydride, itaconic anhydride, citraconic anhydride and tetrahydrophthalic anhydride, fumaric anhydride, the corresponding acids and $C_1$-$C_{10}$ linear and branched dialkyl esters of said acids. Maleic anhydride is preferred. More particularly preferred are grafted copolymers where the backbone polymer chain is a polymer of an olefin selected from ethylene and/or $C_3$-$C_{10}$ $\alpha$-olefins.

The backbone polymer chain of the modified polyolefin acting as a compatibilizer is preferably made up of olefin(s) monomers that can be same as or different from those of component (A).

The compatibilizer component Q) can be produced in a simple manner by reactive extrusion of the polymer, for example with maleic anhydride as grafting agent in the presence of free radical generators (like organic peroxides), as disclosed for instance in EP0572028.

An example of suitable copolymer comprising polar monomers is an ethylene vinyl acetate copolymer (EVA).

Particular preference is given to using a propylene polymer grafted with maleic anhydride as the compatibilizer modified polymer (polypropylene-g-maleic anhydride).

Preferred amounts of groups deriving from polar compounds in the modified polymers are from 0.4 to 3% by weight.

Preferred values of MFR for the modified polymers are from 50 to 400 g/10 min..

The compatibilizer is preferably used in amounts ranging from 0.5 to 15% by weight, preferably from 3 to 10 wt%, more preferably from 4 to 8wt%, the said percentages being referred to sum of A) and B). The ratio of the weight amounts of component Q) and component B) (Q/B) is preferably of from 1 (1:1) to 0.6 (1:1.5).

It is also possible to use a masterbatch which comprises the fillers and the compatibilizer in premixed form.

Further components present in the polyolefin nanocomposite material of the present invention are additives commonly employed in the art, such as antioxidants, anti-acids, light stabilizers, heat stabilizers, antistatic agents, flame retardants, fillers, clays, nucleating agents, pigments, anti-soiling agents, photosensitizers.

A further embodiment of the present invention is a process for the preparation of the said polyolefin nanocomposite material.

The polyolefin composition according to the present invention is prepared by mechanically blending polyolefin component (A), component (B) and optionally the compatibilizer (Q) and optionally further components. The nano-filler component (B) can be blended in pure (undiluted) form with the polyolefin component (A) in the optional presence of a compatibilizer (one step process) or, alternatively and preferably, as above said, as part of an intercalated masterbatch (two step process); in such a case, component (B) is previously dispersed in a polymer resin, that can be same as or different from polyolefin component (A), in the optional presence of the compatibilizer (Q). The masterbatch thus prepared is then blended with the polymer component (A). The nanocomposite composition according to the present invention can be prepared by a melt mixing process using conventional equipments, such as an extruder kneader, like a reciprocating co-kneading extruder (Buss), or a conventional single or a twin screw extruder. Suitable conventional single or a twin screw extruder have length/diameter ratio of 30 or more, preferably from 30 to 50. Preferred twin screw extruders are equipped with screws able to generate low values of shear stress, preferably shear rate is lower than 300 sec-1, more preferably lower than 200 sec-1. Particularly with such extruders lower values of the length/diameter ratio are not excluded; in fact particularly good results are obtainable already with length/diameter ratio from 15 or more. Particularly preferred is the use of an extruder kneader (e.g. Buss) with length/diameter ratio from 15 or more, preferred from 15 to 20 typically ensuring lower shear conditions, particularly preferably shear rate is lower than 100 sec-1.

The nanosized filler is preferably added to the polyolefin resin when it is in the molten state. In the extruder (conventional screw or co-kneader) the mineral filler is preferably added with a feeder positioned after the melting of the polymer.

The two step process of producing the polyolefin nanocomposite material according to the present invention comprises at least the two following steps:

1) preparing an intercalated (partially exfoliated) masterbatch by mixing a polyolefin resin that can be the same as component (A) or different, with a mineral filler (B) in the optional presence of a compatibilizer; and
2) mixing the intercalated masterbatch prepared in step (1) with the polyolefin resin component (A).

In a two step process the use of a low shear twin screw or kneader Buss is particularly preferred in step (1), in the dilution step (2) good results are obtained also with a conventional single screw extruder even with low length/diameter ratio of from 15 or more.

The above-mentioned other additives can be added during either step (1), step (2) or both. The compatibilizer, when used, is added during step (1) before adding the mineral filler (B). Preferably the compatibilizer and other additives are added in step (1) to the polyolefin resin when it is still in the solid state.

The said process uniformly disperses the mineral filler in the polyolefin matrix and leads to nanocomposites having a high degree of exfoliation of the mineral filler (B).

The amount of layered nanosized mineral filler in dehydrated form is preferably from 2 to 40% by weight, more preferably from 2 to 26% by weight with respect to the total weight of the masterbatch. The compatibilizer is present in amounts preferably from 2 to 40% by weight, more preferably from 2 to 26% by weight with respect to the total weight of the masterbatch obtained in step (1). The intercalated masterbatch typically exhibit an encrease of flexural elastic modulus of from 10 to 100% with respect to the starting polyolefin resin.

The above said process steps (1) and (2) are preferably carried out under the following conditions:

- shear mixing rate lower than 300 sec-1, preferably ranging from 30 to 300 $sec^{-1}$, more preferably lower than 200 sec-1., even more preferably lower than 150 $sec^{-1}$;
- a mixing temperature higher than the polymer softening temperature, in particular of at least 180° C, preferably from 180 to 220° C, more preferably from180 to 200°C;
- residence time in mixing machine over 40 sec, preferably over 60, even more preferably over 80 sec.

In a reciprocating single screw co-kneading extruder (e.g. Buss) the material is subject to a shear rate distribution more uniform with respect to conventional single screw or co-rotating twin-screw extruders (e.g. Leistritz), due to the reciprocate movement of the screw flights superimposed to the action of pins fitted in the barrel of a reciprocating single screw co-kneading extruder. The interaction of the oscillating screw shaft and the stationary kneading pins of the barrel ensures multiple splitting, folding and reorientation of the product resulting in an excellent distributive mixing.

Furthermore, in conventional co-rotating twin screw extruders (e.g. Leistritz), the maximum level of shear applied are generally higher than the corresponding ones in a reciprocating co-kneader extruder (Buss).

In a reciprocating single screw co-kneader the dominant level of shear rate is calculated from the rotational contribution of the screw, pin and screw flight interaction and axial contribution through the restriction rings (when present).

In a co-rotating twin screw extruder in presence of mixing (kneading) elements and conveying elements the dominant level of shear rate is calculated in the mixing element.

When a reciprocating single screw co-kneading extruder (e.g. Buss) is used the shear rate is typically and preferably equal to or less than 100 sec-1. Thus, the reciprocating single screw co-kneader extruder is particularly preferred.

Low and uniform shear mixing condition are particularly recommended as preferred after the introduction of the filler.

Uniform dispersion of the nanosized filler with a high degree of exfoliation of the said filler in the polyolefin matrix can be obtained also with a one step process.

The one step process comprises the addition of the undiluted mineral filler component (B) directly on the molten polyolefin resin component (A). The compatibilizer and the other additives, that can be optionally added, are preferably added to component (A) before the said step of addition of the layered mineral filler component (B), when the polyolefin component (A) is still in the solid state.

The addition of the nano-filler on the molten polymer, both in the one step and in the two step process, prevents deterioration of the aspect ratio of the filler platelets.

The same preferred extrusion conditions, reported for the two step process above, are indicated also for the one step process.

Particularly preferred features for the compositions of the present invention are one or more of the following:

- Density: from 0.91 to 1.1 $kg/dm^3$ $kg/dm^3$;
- Flexural Modulus: of at least 150 MPa, preferably at least 200 MPa, even more preferably at least 300 MPa higher than the value for a monomodal polymer of comparable MFR;
- Notched Izod
  (at 23 °Cand -20 °C): values are maintained or even increased in comparison with a monomodal polymer of comparable MFR;

- Tensile Strength at break: of at least 10 MPa higher than the value for a monomodal polymer of comparable MFR;
- HDT/B (0.46 MPa): values are increased, preferably of at least 2°c, even more preferably of at least 3°C in comparison with a monomodal polymer of comparable MFR;

The term "monomodal" is used in the present description to indicate a polymer having a monomodal molecular weight distribution. The molecular weight distribution for monomodal polymer populations is generally reported as the polydispersity, Mw/Mn , where Mw is the weight average molecular weight and Mn is the number average molecular weight. The polydispersity of polyolefin polymers ranges upwards from above the theoretical minimum of 2.0 for catalytic syntheses processes to as much as 100 or more.

Multimodal resins have more than one significant population of molecular weights. The molecular weight distribution can best be visualized by viewing a gel permeation chromatography plot of the resin. Multimodal populations of molecules can even exhibit two or more rather well defined peaks. The terms "bimodal" and "multimodal" are well known to those skilled in the art. The term "multimodal" as used herein includes bimodal resins. The composition according to the invention are have a multimodal molecular weight distribution, preferably an essentially bimodal molecular weight distribution and can be prepared by physical blending two or more resins having different molecular weight distributions.

The compositions according to the present invention preferably have the polydispersity, Mw/Mn, referred to the blend mixture of fractions $A^{I}$) and $A^{II}$), of equal to or higher than 7, preferably equal to or higher than 9 more preferably higher than 10.

Further preferred are the composition having $A^{I}/A^{II}$ equal to or higher than 0.3, of from 0.4 to 1.5, $A^{I}/A^{II}$ being the the weight ratio of the fraction $A^{I}$) and $A^{II}$).

Due to their favorable balance of properties, the compositions of the present invention can be used in many applications, like in the production of extruded, thermoformed or injection moulded articles, in particular parts for automotive, electrical appliances, furniture, or formed articles in general, in particular sheets, parts for electrical appliances, furniture, housewares, or as hyper-filled masterbatches.

Composition according to the present invention having MFR of from 1 to 10 dg/min are particularly preferred for extrusion applications (e.g EBM, film , fibers).

Composition according to the present invention having MFR of from 5 to 20, preferably from 5 to 10 dg/min are particularly preferred for Injection Moulding (IM).

Composition according to the present invention having MFR of from 20 to 100, preferably from 30 to 50 dg/min are particularly preferred for Thin Wall Injection Moulding (TWIM). The following examples are given for illustrating but not limiting purposes.

The following analytical methods are used to determine the properties reported in the description and in the examples.

| | |
|---|---|
| Melt flow rate (MFR): | ISO 1133 with a load of 2.16 kg at 230 °C; |
| Intrinsic Viscosity: | Measured in tetrahydronaphthalene at 135° C; |
| Density: | ISO 1183; |
| Flexural Modulus (secant): | ISO 178 on rectangular specimens 80x10x4 mm from T-bars ISO527-1 Type 1A; |
| Tensile Modulus (secant): | ISO 527/-1, -2 on specimens Type 1A with velocity of 1 mm/min, span of 50 mm; |
| Izod impact strength (notched) | ISO 180/1A; |
| Tensile strength and elongation at Break and at Yield: | ISO 527/-1, -2 on specimens Type 1A with velocity of 50 mm/min, span of 50 mm; |
| HDTB (0.46 MPa): | (heat deflection temperature) ISO 75B -1. -2 on specimens in edgewise position. |

T-bar preparation (injection moulded)

Test specimens are injection moulded according to Test Method ISO 1873-2 (1989).

Spiral flow test

A single cavity endless spiral flow mould with 2.5 mm depth is used and the compositions of were injected at a constant melt temperature of 230°C, at different injection pressures (2, 4, 6, 8, 10 MPa).

The injection moulding machine was Sandretto Model 190 with 190 ton clamping force; mould temperature is 40 °C

Under these conditions, for every injection pressure, the flow path length expressed in millimeters was measured,

which is proportional to the flowability of the material.

Determination of Isotacticity Index (solubility in xylene at room temperature, in % by weight)

2.5 g of polymer and 250 $cm^3$ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25 °C for 30 minutes as well. The so formed solid is filtered on quick filtering paper. 100 $cm^3$ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature is then calculated.

The percent by weight of polymer insoluble in xylene at room temperature is considered the isotacticity index of the polymer. This value corresponds substantially to the isotacticity index determined by extraction with boiling n-heptane, which by definition constitutes the isotacticity index of polypropylene.

MWD Determination

The Mn and Mw values are measured by way of gel permeation chromatography (GPC) at 145°C using a Alliance GPCV 2000 instrument (Waters) equipped with three mixed-bed columns TosoHaas TSK GMHXL-HT having a particle size of 13 μm. The dimensions of the columns are 300 × 7.8 mm. The mobile phase used is vacuum distilled 1,2,4-Trichlorobenzene (TCB) and the flow rate is kept at 1.0 ml/min. The sample solution is prepared by heating the sample under stirring at 145°C in TCB for two hours. The concentration is 1 mg/ml. To prevent degradation, 0.1 g/l of 2,6- diterbutyl-p-cresol are added. 326.5 μL of solution are injected into the column set. A calibration curve is obtained using 10 polystyrene standard samples (EasiCal kit by Polymer Laboratories) with molecular weights in the range from 580 to 7500000; additionally two other standards with peak molecular weight of 11600000 and 13200000 from the same manufacturer are included. It is assumed that the K values of the Mark-Houwink relationship are:

K = $1.21 \times 10^{-4}$ dL/g and $\alpha$ = 0.706 for the polystyrene standards;
K = 1.90x $10^{-4}$ dL/g and $\alpha$ = 0.725 for the polypropylene samples;
K = 1.93x $10^{-4}$ dL/g and $\alpha$ = 0.725 for the propylene copolymer samples.

A third order polynomial fit is used for interpolate the experimental data and obtain the calibration curve. Data acquisition and processing is done by using Empower 1.0 with GPCV option by Waters.

Melting temperature

Determined by DSC according ISO 3146 with a heating rate of 20K per minute.

$^{13}$C-NMR (for metallocene-produced propylene polymers)

*NMR analysis.* 13C-NMR spectra of PP are acquired on a DPX-400 spectrometer operating at 100.61 MHz in the Fourier transform mode at 120 °C. The peak of the *mmmm* pentad carbon are used as internal reference at 21.8 ppm and 29.9 ppm respectively. The samples are dissolved in 1,1,2,2-tetrachloroethane-*d2* at 120 °C with a 8% wt/v concentration in a 5 mm tube. Each spectrum is acquired with a 90° pulse, 12 seconds of delay between pulses and CPD (WALTZ 16) to remove 1H-13C coupling. About 2500 transients are stored in 32K data points using a spectral window of 6000 Hz.

The assignments of PP spectra are made according to "Selectivity in Propylene Polymerization with Metallocene Catalysts", L. Resconi, L. Cavallo, A. Fait, F. Piemontesi, Chem. Rev., 100, 1253, (2000))

The *mmmm* content is obtained modelling the experimental pentad distribution with the enantiomorphic site model. The *mmmm* content of PP with high content of 2,1 (E) and 1,3 (H) errors is obtained as:

$$[mmmm] = 100\ (\Sigma[CH3]\text{-}5[mrrm]\text{-}5[E]\text{-}5[H])\ /\ (\Sigma[CH3])$$

where $\Sigma[CH_3]$ is the sum of all CH3 groups.

The content of 2,1 and 3,1 errors is obtained as:

$$[E] = 100\ (E_9/\Sigma[CH_2])$$

$$[H] = 100\ (0.5\ H_2/\Sigma[CH_2])$$

where $E_9$ is the peak at 42.14 ppm, $H_2$ is the peak at 30.82 ppm and $\Sigma[CH_2]$ is the sum of all $CH_2$ groups.

Examples 1 to 15 and reference examples (R)

The following materials are used as components A), B) and Q).

Component A)

PP-1: propylene homopolymer with MFR (230 °C/2.16 kg) = 1800 g/10 min, reactor grade, Mw/Mn of 2.6, Mw of 76997 and isotacticity index in xylene at room temperature of 98.5 % (isotactic pentades (mmmmm) higher than 92 %), DSC melting temperature of 146 °C, intrinsic viscosity of 0.52 dl/g,

PP-2: propylene homopolymer with MFR (230 °C/2.16 kg) = 12 g/10 min. Mw/Mn = 5.4 and isotacticity index of 96.7 %, Tensile modulus 1500 MPa.

PP-3: propylene homopolymer with MFR (230 °C/2.16 kg) = 1.2 g/10 min. Mw/Mn = 6.5 and isotacticity index of 97 %, Tensile modulus 1450 MPa.

PP-4: propylene homopolymer with MFR (230 °C/2.16 kg) = 62 g/10 min, reactor grade, Mw/Mn of = 2.8 and isotacticity index in Xylene at room temperature of 99 %, DSC melting temperature of 148 °C, Tensile modulus 1700 MPa.

PP-5: propylene homopolymer with MFR (230 °C/2.16 kg) = 2 g/10 min. Mw/Mn = 6.7 and isotacticity index of 96 %, Tensile modulus 1500 MPa.

PP-6: propylene homopolymer with MFR (230 °C/2.16 kg) = 0.3 g/10 min. Mw/Mn = 6.8 and isotacticity index of 96 %, Tensile modulus 1400 MPa..

PP-7: propylene homopolymer with MFR (230 °C/2.16 kg) = 3.2 g/10 min. Mw/Mn = 7.3 and isotacticity index of 98.2 %, Tensile modulus 2150 MPa

PP-1 is obtained with a catalyst system prepared as described in PCT/EP2004/007061 by using rac-dimethylsilylbis(2-methyl-4, 5-benzo-indenyl)-zirconium dichloride.

The catalyst system in the form of catalyst mud obtained as described in PCT/EP2004/007061 is fed in a precontact vessel in which it is diluted with about 5 (Kg/h) of propane. From the pre-contact vessel the catalyst system is fed to a prepolymerization loop in which propylene is fed at the same time. The prepolymerization temperature is of 45 °C The residence time of the catalyst in the prepolymerization loop is 8 minutes. The prepolymerized catalyst obtained in the prepolymerization loop is then continuously fed into a loop reactor in which propylene is fed at a rate of 332 Kg/h. The polymerization temperature is of 70 °C. The polymer is discharged from the loop reactor, separated from the unreacted monomer and dried. The MFR of the product is controlled by the feed of hydrogen, to be adjusted to get the required MFR of the polymer. In the case of PP-1 the hydrogen concentration is of 1010 ppm.

PP-4 is prepared in the same way as PP-1 with the difference that the hydrogen feed is 320 ppm.

Component B)

Cloisite 15A: organoclay marketed by Southern Clay containing 43 % of organic component (organic ammonium salt).

Perkalite F100: organo-hydrotalcite marketed by AKZO NOBEL containing 50% of organic component (a $C_{16}$-$C_{18}$ saturated fatty acid such as palmitic or stearic acid as modifier)

Component Q)

PP-MA: Propylene homopolymer grafted with maleic anhydride (MA), with MFR of 115 g/10 min and MA content of 1 % weight (Polybond 3200, sold by Chemtura).

Component A) contains also about 0.3% by weight of conventional antioxidant and antiacid additives.

The composition were prepared by extrusion, using an reciprocating single screw co-kneading extruder, model Buss 70 (screw diameter mm 70, length/diameter ratio = 17 L/D). The line was provided with gravimetric feeders: Components A) and Q) (Base polymers and compatibiliser) and additives have been fed into the barrel nr.1 and component B) (the nanofiller) has been fed into a second feeding port, through vertical hopper.

Operating parameters were:

Screw speed: 270 rpm
Output: 80 kg/h
Extrusion temperature: 180 °C
Residence time 80 sec
Shear rate 50 $sec^{-1}$

In table 1 examples at 5% and 7% by weight of nanofiller are reported. Increasing the amount of nanofiller (from 5 to 7 %wt) the skilled person would expect a reduction of processability, this is in fact observed comparing the reference example 3R and 1R. Comparing ex 3 and 1, having the same ratio of high melt flow component and low melt flow component ($A^I/A^{II}$), it is found surprisingly that, for the composition according to the invention, increasing the nanofiller content (from 5 to 7 %wt) the processability is further improved (spiral flow increase).

In table 2 examples were also prepared on a Leistritz 27 twin screw extruder (screw diameter = 27 mm; length/diameter ratio = 40 L/D).This line was provided with gravimetric feeders: Components A) and Q) and additives have been fed into the barrel nr.1 and component B) has been fed into barrel nr.4, via forced side feeding.

Operating parameters were:

Screw speed: 220 rpm
Output: 16 kg/h
Extrusion temperature: 180°C
Residence time: 25 sec
Shear rate: 180 $sec^{-1}$

In table 3 a two step process is used for preparing the same composition of example 2. The same extruder kneader (model Buss 70) and process conditions of example 2 were used for the masterbatch (MB) preparation in step (1) and in the dilution step (2).

The final properties of the prepared compositions are reported in Tables 1 to 5, together with the relative amounts of the components, fractions and compatibilizer when present.

Table 1

| Example No. | | 1R | 1 | 3R | 2 | 3 | 4 |
|---|---|---|---|---|---|---|---|
| Extruder type | | BUSS | BUSS | | BUSS | BUSS | BUSS |
| COMPONENTS (% by weight) | | | | | | | |
| PP-1 (MFR 1800) | | | 30 | | 25 | 30 | 35 |
| PP-2 (MFR 12 HOMO PP) | | 90 | | 86 | | | |
| PP-3 (MFR 1,2 HOMO PP) | | | 60 | | 61 | 56 | 51 |
| Cloisite 15A | | 5 | 5 | 7 | 7 | 7 | 7 |
| POLYBOND 3200 | | 5 | 5 | 7 | 7 | 7 | 7 |
| Tot | | 100 | 100 | 100 | 100 | 100 | 100 |
| A | | 95 | 95 | 93 | 93 | 93 | 93 |
| B | | 5 | 5 | 7 | 7 | 7 | 7 |
| $A^I$ | | | 32 | | 27 | 32 | 38 |
| $A^{II}$ | | | 63 | | 66 | 60 | 55 |

(continued)

| Example No. | | 1R | 1 | 3R | 2 | 3 | 4 |
|---|---|---|---|---|---|---|---|
| Q | | | 5 | | 8 | 8 | 8 |
| $A^I/A^{II}$ | | | 0.5 | | 0.4 | 0.5 | 0.7 |
| PROPERTIES | | | | | | | |
| MFR (dg/min) | | 7.2 | 6.5 | 6.8 | 5.3 | 6.3 | 7.5 |
| Density (kg/dm$^3$) | | 0.923 | 0.923 | 0.924 | 0.931 | 0.932 | 0.932 |
| Flexural Modulus (MPa) | | 2180 | 2390 | 2140 | 2480 | 2540 | 2560 |
| Tensile Modulus (MPa) | | 2080 | 2280 | 2070 | 2350 | 2380 | 2390 |
| IZOD notched at 23 °C (kJ/m$^2$) | | 2.9 | 3.2 | 2.5 | 3.1 | 2.9 | 2.8 |
| IZOD notched at - 20 °C (kJ/m$^2$) | | 1.3 | 1.4 | 1.2 | 1.5 | 1.3 | 1.3 |
| Tensile Strength at yield (MPa) | | 35.8 | 39 | 37.6 | 38.4 | 38.6 | 39.1 |
| Elongation at yield (%) | | 8 | 7 | 6.4 | 6.5 | 6.4 | 6.3 |
| Tensile Strength at break (MPa) | | 26.7 | 33 | 30.6 | 28.8 | 33.1 | 33.2 |
| Elongation at break (%) | | 21 | 15 | 23 | 16 | 14 | 11.6 |
| HDT 0.46 MPa | | 116.2 | 119 | 116 | 117.3 | 119.7 | 119.1 |
| | | | | | | | |
| Spiral flow length at 2 MPa | | 375 | 380 | 355 | 360 | 410 | 440 |
| Spiral flow length at 4 MPa | | 650 | 680 | 640 | 660 | 770 | 810 |
| Spiral flow length at 6 MPa | | 880 | 910 | 870 | 890 | 985 | 1030 |
| Spiral flow length at 8 MPa | | 1110 | 1160 | 1090 | 1120 | 1245 | 1295 |
| Spiral flow length at 10 MPa | | 1335 | 1410 | 1305 | 1340 | 1485 | 1560 |
| Haze (%) | | 32 | 36 | 40 | 43 | | |

Table 2

| Example | 1R | 5R | 5 | | 1 |
|---|---|---|---|---|---|
| Extruder type | BUSS | LEISTRITZ | LEISTRITZ | | BUSS |
| COMPONENTS (% by weight) | | | | | |
| PP-1 (MFR 1800) | | | 30 | | 30 |
| PP-2 (MFR 12 HOMO PP) | 90 | 90 | | | |
| PP-3 (MFR 1,2 HOMO PP) | | | 60 | | 60 |
| Cloisite 15A | 5 | 5 | 5 | | 5 |
| POLYBOND 3200 | 5 | 5 | 5 | | 5 |
| tot | 100 | 100 | 100 | | 100 |
| A | 95 | 95 | 95 | | 95 |
| B | 5 | 5 | 5 | | 5 |
| $A^I$ | | | 32 | | 32 |
| $A^{II}$ | | | 63 | | 63 |
| Q | | | 5 | | 5 |

(continued)

| Example | 1R | 5R | 5 | | 1 |
|---|---|---|---|---|---|
| $A^I/A^{II}$ | | | 0.5 | | 0.5 |
| PROPERTIES | | | | | |
| MFR (dg/min) | 7.2 | 7.1 | 6.4 | | 6.5 |
| Density (kg/dm$^3$) | 0.923 | 0.923 | 0.925 | | 0.923 |
| Flexural Modulus (MPa) | 2180 | 2110 | 2300 | | 2390 |
| Tensile Modulus (MPa) | 2080 | 2030 | 2220 | | 2280 |
| IZOD notched at 23 °C (kJ/m$^2$) | 2.9 | 2.8 | 2.9 | | 3.2 |
| IZOD notched at - 20 °C (kJ/m$^2$) | 1.3 | 1.3 | 1.2 | | 1.4 |
| Tensile Strength at yield (MPa) | 35.8 | 35.7 | 38 | | 39 |
| Elongation at yield (%) | 8 | 7.4 | 6.8 | | 7 |
| Tensile Strength at break (MPa) | 26.7 | 23.5 | 31.4 | | 33 |
| Elongation at break (%) | 21 | 16.9 | 15.4 | | 15 |
| HDT 0.46 MPa | 116.2 | | | | 119 |
| | | | | | |
| Spiral flow length at 2 MPa | 375 | | | | 380 |
| Spiral flow length at 4 MPa | 650 | | | | 680 |
| Spiral flow length at 6 MPa | 880 | | | | 910 |
| Spiral flow length at 8 MPa | 1110 | | | | 1160 |
| Spiral flow length at 10 MPa | 1335 | | | | 1410 |
| Haze (%) | 32 | 33 | 35 | | 36 |

Table 3

| Example No. | | 6 | 7 | | | 2 |
|---|---|---|---|---|---|---|
| | | Step (1) Concentrate MB | Step(2) dilution | Final composition | | |
| Extruder type | | BUSS | BUSS | | | BUSS |
| COMPONENTS (% by weight) | | | | | | |
| PP-1 (MFR 1800) | | 20 | 15.8 | 25.8 | | 25 |
| PP-3 (MFR 1,2 HOMO PP) | | 52 | 34.2 | 60.2 | | 61 |
| Cloisite 15[a] | | 14 | | 7 | | 7 |
| POLYBOND 3200 | | 14 | | 7 | | 7 |
| Sample 7 | | | 50 | | | |
| Tot | | 100 | 100 | 100 | | 100 |
| A | | 86 | | 93 | | 93 |
| B | | 14 | | 7 | | 7 |
| $A^I$ | | 23 | | 28 | | 27 |
| $A^{II}$ | | 60 | | 65 | | 66 |
| Q | | 16 | | 8 | | 8 |

(continued)

| Example No. | | 6 | 7 | | | 2 |
|---|---|---|---|---|---|---|
| | | Step (1) Concentrate MB | Step(2) dilution | Final composition | | |
| Extruder type | | BUSS | BUSS | | | BUSS |
| $A^I/A^{II}$ | | 0.4 | | 0.4 | | 0.4 |
| PROPERTIES | | | | | | |
| MFR (dg/min) | | 2.9 | 4.6 | | | 5.3 |
| Density ($kg/dm^3$) | | 0.958 | 0.934 | | | 0.931 |
| Flexural Modulus (MPa) | | 2850 | 2520 | | | 2480 |
| Tensile Modulus (MPa) | | 2660 | 2380 | | | 2350 |
| IZOD notched at 23 °C ($kJ/m^2$) | | 2.4 | 3.3 | | | 3.1 |
| IZOD notched at - 20 °C ($kJ/m^2$) | | 1.3 | 1.3 | | | 1.5 |
| Tensile Strength at yield (MPa) | | 36.7 | 38.8 | | | 38.4 |
| Elongation at yield (%) | | 5.5 | 6.8 | | | 6.5 |
| Tensile Strength at break (MPa) | | 35.6 | 31.6 | | | 28.8 |
| Elongation at break (%) | | 7.8 | 14 | | | 16 |
| HDT 0.46 MPa | | 116.1 | 118.2 | | | 117.3 |
| | | | | | | |
| Spiral flow length at 2 MPa | | 380 | 370 | | | 360 |
| Spiral flow length at 4 MPa | | 695 | 665 | | | 660 |
| Spiral flow length at 6 MPa | | 940 | 905 | | | 890 |
| Spiral flow length at 8 MPa | | 1190 | 1155 | | | 1120 |
| Spiral flow length at 10 MPa | | 1370 | 1350 | | | 1340 |
| | | | | | | |

Table 4. Twim application target

| Example No. | 8R | | 8 | | 9 | 10 |
|---|---|---|---|---|---|---|
| Extruder type | BUSS | | BUSS | | BUSS | BUSS |
| COMPONENTS (% by weight) | | | | | | |
| PP-1 (MFR 1800) | | | 44 | | 30 | 35 |
| PP-4 (MFR 65) | 86 | | | | | |
| PP-5 (MFR 2 Homo PP) | | | 42 | | | |
| PP-6 (MFR 0,3 Homo PP) | | | | | 56 | |
| PP-7 (MFR 3.2Homo PP) | | | | | | 51 |
| Cloisite 15A | 7 | | 7 | | 7 | 7 |
| POLYBOND 3200 | 7 | | 7 | | 7 | 7 |
| tot | 100 | | 100 | | 100 | 100 |
| A | 93 | | 93 | | 93 | 93 |
| B | 7 | | 7 | | 7 | 7 |

(continued)

| Example No. | 8R | | 8 | | 9 | 10 |
|---|---|---|---|---|---|---|
| $A^I$ | | | 47 | | 32 | 38 |
| $A^{II}$ | | | 45 | | 60 | 55 |
| Q | | | 8 | | 8 | 8 |
| $A^I/A^{II}$ | | | 1.0 | | 0.5 | 0.7 |
| | | | | | | |
| PROPERTIES | | | | | | |
| MFR (dg/min) | 36.4 | | 35.9 | | 18 | 27 |
| Density (kg/dm$^3$) | 0.929 | | 0.929 | | 0.933 | 0.932 |
| Flexural Modulus (MPa) | 2050 | | 2420 | | 2510 | 2570 |
| Tensile Modulus (MPa) | 1960 | | 2320 | | 2430 | 2450 |
| IZOD notched at 23 °C (kJ/m$^2$) | 2 | | 2.2 | | 2.4 | 2.2 |
| IZOD notched at - 20 °C (kJ/m$^2$) | 1.2 | | 1.4 | | 1.5 | 1.7 |
| Tensile Strength at yield (MPa) | 32.3 | | 35.7 | | 38 | |
| Elongation at yield (%) | 6.5 | | 6.7 | | 6.2 | |
| Tensile Strength at break (MPa) | 27.4 | | 31.4 | | 34.3 | 35.9 |
| Elongation at break (%) | 12 | | 8.9 | | 9 | 4.3 |
| HDT 0.46 MPa | 109.1 | | 112.7 | | 116.1 | 118.4 |
| | | | | | | |
| Spiral flow length at 2 MPa | 600 | | 725 | | 700 | 870 |
| Spiral flow length at 4 MPa | 990 | | 1200 | | 1160 | 1415 |
| Spiral flow length at 6 MPa | 1315 | | 1545 | | 1520 | 1815 |
| Spiral flow length at 8 MPa | 1680 | | 1930 | | 1910 | >2000 |
| Spiral flow length at 10 MPa | >2000 | | >2000 | | >2000 | >2000 |

Table 5

| Example No. | | 11R | 11 | 12 |
|---|---|---|---|---|
| COMPONENTS (% by weight) | | | | |
| PP-1 (MFR 1800) | | | 48 | 46 |
| PP-4 (MFR 65) | | 88 | | |
| PP-5 (MFR 2 Homo PP) | | | 45 | 42 |
| POLYBOND 3200 | | 5 | 0 | 5 |
| Perkalite F 100 | | 7 | 7 | 7 |
| tot | | 100 | 100 | 100 |
| A | | 93 | 93 | 93 |
| B | | 7 | 7 | 7 |
| $A^I$ | | | 52 | 49 |
| $A^{II}$ | | | 48 | 45 |

(continued)

| Example No. | | 11R | 11 | 12 |
|---|---|---|---|---|
| Q | | | 0 | 5 |
| $A^I/A^{II}$ | | | 1.1 | 1.1 |
| | | | | |
| PROPERTIES | | | | |
| MFR (dg/min) | | 40.1 | 40.6 | 38.9 |
| Density (kg/dm$^3$) | | 0.922 | 0.923 | 0.9264 |
| Flexural Modulus (MPa) | | 1820 | 2090 | 2110 |
| Tensile Modulus (MPa) | | 1750 | 2040 | 2090 |
| IZOD notched at 23 °C (kJ/m$^2$) | | 2.4 | 2.9 | 2.6 |
| IZOD notched at - 20 °C (kJ/m$^2$) | | 1.7 | 1.6 | 1.6 |
| Tensile Strength at yield (MPa) | | 30.2 | 33.4 | 32.7 |
| Elongation at yield (%) | | 7.4 | 6.1 | 6.1 |
| Tensile Strength at break (MPa) | | 16.9 | 28.5 | 30.3 |
| Elongation at break (%) | | 120 | 13.1 | 12 |
| HDT 0.46 MPa | | 107.6 | 110.5 | 115.4 |
| | | | | |
| Spiral flow length at 2 MPa | | 510 | 615 | 590 |
| Spiral flow length at 4 MPa | | 850 | 995 | 970 |
| Spiral flow length at 6 MPa | | 1110 | 1295 | 1255 |
| Spiral flow length at 8 MPa | | 1380 | 1600 | 1560 |
| Spiral flow length at 10 MPa | | 1650 | 1920 | 1875 |
| | | | | |

## Claims

**1.** Filled polyolefin compositions comprising:

A) from 99.9% to 75% by weight of a polypropylene component;
B) from 0.1% to 25% by weight of a nanosize mineral filler;

wherein the percentages of A) and B) are referred to the sum of A) and B), and A) is selected from the following compositions:

a) a polypropylene composition containing from 20% to 70% by weight of a polypropylene fraction $A^I$) having a melt flow rate ($MFR^I$) value of 100 g/10 min. or more, and from 30% to 80% by weight of a polypropylene fraction $A^{II}$) having a melt flow rate ($MFR^{II}$) value of from 0.1 to 30 g/10 min., the said percentages of $A^I$) and $A^{II}$) being referred to the sum of $A^I$) and $A^{II}$); or
b) a polypropylene composition containing from 15% to 60% by weight of a polypropylene fraction $A^I$) having a melt flow rate ($MFR^I$) value of 100 g/10 min. or more, from 25% to 70% by weight of a polypropylene fraction $A^{II}$) having a melt flow rate ($MFR^{II}$) value of from 0.1 to 30 g/10 min. and from 0.5% to 20% by weight of a compatibilizer Q), the said percentages of $A^I$), $A^{II}$) and Q) being referred to the sum of $A^I$), $A^{II}$) and Q);

said fractions $A^I$) and $A^{II}$) being independently selected from propylene homopolymers and random copolymers of propylene containing up to 5% by moles of ethylene and/or $C_4$-$C_{10}$ $\alpha$-olefin(s), all the melt flow rate values being

measured according to ISO 1133 with a load of 2.16 kg at 230 °C.

2. The compositions of claim 1, wherein the compatibilizer Q) is a propylene polymer grafted with maleic anhydride.

3. The compositions of claim 1, wherein the propylene homopolymers and copolymers of the polypropylene fraction $A^I$) are obtained directly in polymerization in the presence of a metallocene-based catalyst.

4. The compositions of claim 1, wherein the filler B) is a layered silicate or a hydrotalcite.

5. An article obtained from a composition according to any of the preceding claims.

6. The article of claim 5 prepared by injection molding, extrusion or thermoforming.

7. The article of claim 4 or 5 in form of a pipe, film, or fiber.

8. Use of the compositions of anyone of claims 1 to 4 as concentrates.

9. Process for the preparation of the compositions of anyone of claims 1 to 4, comprising a step of extrusion performed with a shear rate of less than 300 $sec^{-1}$.

**Patentansprüche**

1. Gefüllte Polyolefinzusammensetzungen, umfassend:

   A) 99,9 bis 75 Gew.-% einer Polypropylenkomponente;
   B) 0,1 % bis 25 Gew.-% eines Mineralfüllstoffs von Nanogröße;

   wobei die Prozentsätze von A) und B) sich auf die Summe von A) und B) beziehen und A) aus den folgenden Zusammensetzungen ausgewählt ist:

   a) einer Polypropylenzusammensetzung, die 20 bis 70 Gew.-% eines Polypropylenanteils $A^I$), der einen Schmelzfließraten- ($MFR^I$-) Wert von 100 g/10 min oder mehr aufweist, und 30 bis 80 Gew.-% eines Polypropylenanteils $A^{II}$) enthält, der einen Schmelzfließraten- ($MFR^{II}$-) Wert von 0,1 bis 30 g/10 min aufweist, wobei die Prozentsätze von $A^I$) und $A^{II}$) sich auf die Summe von $A^I$) und $A^{II}$) beziehen; oder
   b) einer Polypropylenzusammensetzung, die 15 bis 60 Gew.-% eines Polypropylenanteils $A^I$, der einen Schmelzfließraten- ($MFR^I$-) Wert von 100 g/10 min oder mehr aufweist, 25 bis 70 Gew.-% eines Polypropylenanteils $A^{II}$), der einen Schmelzfließraten- ($MFR^{II}$-) Wert von 0,1 bis 30 g/10 min aufweist, und 0,5 bis 20 Gew.-% eines Verträglichmachers Q) enthält, wobei die Prozentsätze von $A^I$), $A^{II}$) und Q) sich auf die Summe von $A^I$), $A^{II}$) und Q) beziehen;

   wobei die Anteile $A^I$) und $A^{II}$) unabhängig unter Propylenhomopolymeren und statistischen Copolymeren von Propylen, die bis zu 5 Mol-% Ethylen und/oder $C_4$-$C_{10}$ a-Olefin(e) enthalten, ausgewählt werden, wobei alle Schmelzfließratenwerte ISO 1133 entsprechend unter einer Belastung von 2,16 kg bei 230 °C gemessen werden.

2. Zusammensetzungen nach Anspruch 1, wobei der Verträglichmacher Q) ein mit Maleinsäureanhydrid gepfropftes Propylenpolymer ist.

3. Zusammensetzungen nach Anspruch 1, wobei die Propylenhomopolymere und die Copolymere des Polypropylenanteils $A^I$) direkt durch Polymerisation in Gegenwart eines auf Metallocen basierenden Katalysators erhalten werden.

4. Zusammensetzungen nach Anspruch 1, wobei der Füllstoff B) ein Schichtsilicat oder ein Hydrotalcit ist.

5. Artikel, der aus einer Zusammensetzung nach einem der vorhergehenden Ansprüche erhalten wird.

6. Artikel nach Anspruch 5, der durch Spritzgießen, Extrusion oder Thermoformen hergestellt wird.

7. Artikel nach Anspruch 4 oder 5 in Form eines Rohrs, einer Folie oder einer Faser.

**8.** Verwendung der Zusammensetzungen nach einem der Ansprüche 1 bis 4 als Konzentrate.

**9.** Verfahren für die Herstellung der Zusammensetzungen nach einem der Ansprüche 1 bis 4, umfassend einen Extrusionsschritt, der mit einer Scherrate von weniger als 300 $sec^{-1}$ durchgeführt wird.

**Revendications**

**1.** Compositions polyoléfiniques chargées comprenant :

A) 99,9% à 75% en poids d'un constituant polypropylène ;
B) 0,1% à 25% en poids d'une charge minérale de taille nanométrique ;

les pourcentages de A) et B) se référant à la somme de A) et B), et A) étant choisi parmi les compositions suivantes :

a) une composition de polypropylène contenant 20% à 70% en poids d'une fraction de polypropylène $A^{I}$) présentant une valeur de l'indice de fluidité à chaud ($MFR^{I}$) de 100 g/10 min. ou plus, et 30% à 80% en poids d'une fraction de polypropylène $A^{II}$) présentant une valeur de l'indice de fluidité à chaud ($MFR^{II}$) de 0,1 à 30 g/10 min., lesdits pourcentages de $A^{I}$) et $A^{II}$) se référant à la somme de $A^{I}$) et $A^{II}$) ; ou
b) une composition de polypropylène contenant 15% à 60% en poids d'une fraction de polypropylène $A^{I}$) présentant une valeur de l'indice de fluidité à chaud ($MFR^{I}$) de 100 g/10 min. ou plus, 25% à 70% en poids d'une fraction de polypropylène $A^{II}$) présentant une valeur de l'indice de fluidité à chaud ($MFR^{II}$) de 0,1 à 30 g/10 min. et 0,5% à 20% en poids d'un agent de compatibilisation Q), lesdits pourcentages de $A^{I}$), $A^{II}$) et Q) se référant à la somme de $A^{I}$), $A^{II}$) et Q) ;
lesdites fractions $A^{I}$) et $A^{II}$) étant choisies indépendamment parmi les homopolymères de propylène et les copolymères statistiques de propylène contenant jusqu'à 5% en mole d'éthylène et/ou de $C_4$-$C_{10}$-$\alpha$-oléfine(s) ; toutes les valeurs d'indice de fluidité à chaud étant mesurées selon la norme ISO 1133 avec une charge de 2,16 kg à 230°C.

**2.** Compositions selon la revendication 1, l'agent de compatibilisation Q) étant un polymère de propylène greffé par de l'anhydride maléique.

**3.** Compositions selon la revendication 1, les homopolymères et les copolymères de propylène de la fraction de polypropylène $A^{I}$) étant obtenus directement par polymérisation en présence d'un catalyseur à base de métallocène.

**4.** Compositions selon la revendication 1, la charge B) étant un silicate à couches ou une hydrotalcite.

**5.** Objet obtenu à partir d'une composition selon l'une quelconque des revendications précédentes.

**6.** Objet selon la revendication 5, préparé par moulage par injection, extrusion ou thermoformage.

**7.** Objet selon la revendication 4 ou 5, sous forme d'un tuyau, d'un film ou d'une fibre.

**8.** Utilisation des compositions selon l'une quelconque des revendications 1 à 4 comme concentrats.

**9.** Procédé de préparation des compositions selon l'une quelconque des revendications 1 à 4, comprenant une étape d'extrusion réalisée à une vitesse de cisaillement inférieure à 300 $sec^{-1}$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060264557 A, Exxon
- US 5910523 A
- WO 2006131450 A
- US P4399054 A
- EP 45977 A
- US P4472524 A
- EP 0622380 A
- WO 9102012 A
- WO 9200333 A
- WO 0162764 A
- EP 0747322 A, Toyota
- EP 0572028 A
- EP 2004007061 W


### Non-patent literature cited in the description


- **L. RESCONI ; L. CAVALLO ; A. FAIT ; F. PIEMONTESI.** Selectivity in Propylene Polymerization with Metallocene Catalysts. *Chem. Rev.,* 2000, vol. 100, 1253